# FASCICULE DE BREVET EUROPEEN

(11) **EP 2 737 346 B1**
(45) Date de publication et mention de la délivrance du brevet: **15.05.2019**
(21) Numéro de dépôt: 12753765.2
(22) Date de dépôt: 30.07.2012
(51) Int. Cl.: G02B 6/00, B32B 17/00, F21V 31/00, B60Q 3/208, F21Y 115/10, F21W 107/00

(54) **VITRAGE LUMINEUX DE VEHICULE, FABRICATIONS**
LEUCHTENDE VERGLASUNGSEINHEIT FÜR FAHRZEUGE UND HERSTELLUNG DAVON
LUMINOUS GLAZING UNIT FOR VEHICLE, MANUFACTURE THEREOF

(30) Priorité: 29.07.2011 FR 1157012
(43) Date de publication de la demande: 04.06.2014
(73) Titulaire: Saint-Gobain Glass France, 92400 Courbevoie (FR)
(72) Inventeur: RICHARD, Alexandre, F-75019 Paris (FR); GRANDGIRARD, Bastien, F-60490 Marqueglise (FR); VERRAT-DEBAILLEUL, Adèle, F-60150 Villers-sur-Coudun (FR); KLEO, Christophe, F-60350 Attichy (FR)
(74) Mandataire: Saint-Gobain Recherche
(86) Numéro de dépôt international: PCT/FR2012/051793
(87) Numéro de publication internationale: WO 2013/017791

(56) Documents cités:
- EP-A1- 1 234 752
- EP-A2- 1 491 835
- WO-A1-2010/112191
- WO-A2-2011/092420
- DE-B3- 10 323 715
- FR-A3- 2 899 852
- US-A1- 2004 031 234
- US-A1- 2010 073 959
- US-B1- 6 536 930

## Description

La présente invention concerne les vitrages de véhicules, et en particulier les vitrages lumineux de véhicules, notamment à diodes électroluminescentes, et le procédé de fabrication de tels vitrages de véhicules.

De plus en plus de véhicules font appel aux diodes électroluminescentes (LED en anglais ou DEL en français).

Le document WO2006128941 propose par exemple un toit panoramique à éclairage homogène sur la surface par diode(s) électroluminescente(s). Ce toit comporte une structure feuilletée qui, comme montrée en figure 8, est composée d'une feuille externe extractrice de lumière, d'une feuille centrale transparente de guidage de lumière, et d'une feuille interne de diffusion de la lumière. La source de lumière est une pluralité de diodes électroluminescentes montées sur un support latéral fixé à la tranche des feuilles interne et externe tandis qu'un trou est pratiqué dans la feuille centrale pour loger les diodes.

Le toit panoramique est fixé par collage des bords périphériques de la feuille externe à la carrosserie du toit. Les diodes et la zone de collage périphérique sont masquées par la garniture interne.

La demande internationale WO 2011/092420 A2, publiée le 4 août 2011 et revendiquant la date de priorité du 26 janvier 2010 décrit un vitrage lumineux de véhicule comportant toutes les caractéristiques de la revendication 1, à l'exclusion de la couche de protection contre l'humidité et/ ou de l'encapsulation dont est pourvu le support de diodes.

L'invention se propose d'élargir la gamme des vitrages éclairants de véhicule disponibles.

La présente invention vise en effet un vitrage lumineux de véhicule à source de lumière écologique et efficace (diodes électroluminescentes,), convenant notamment pour toute configuration de toit, et particulièrement les toits montés par l'extérieur au toit de carrosserie, toits ouvrants ou fixes.

Pour cela, le vitrage lumineux de véhicule doit être durable, compact, robuste tout en restant simple, répondant ainsi au cahier des charges imposés par les constructeurs de véhicule.

La présente invention vise aussi un vitrage lumineux de véhicule satisfaisant aux exigences industrielles (en termes de rendement, donc de coût, de cadence, d'automatisation...), rendant ainsi possible une production « bas coût » sans sacrifier les performances.

L'invention propose à cet effet un vitrage lumineux de véhicule comportant :
- une première feuille en verre minéral ou organique présentant une première face principale et une deuxième face principale, avec éventuellement une zone opaque, périphérique si la feuille est organique bimatière) et une tranche,
- une source lumineuse périphérique avec une face émettrice, qui est formée des diodes électroluminescentes comportant chacune une puce semi-conductrice sur (au moins) un profilé support des diodes, (l'ensemble profilé et diodes étant appelé couramment une barrette de diodes), la face émettrice étant en regard d'un bord de la deuxième face dit d'injection (en contact ou non de la deuxième face) pour une propagation de la lumière injectée visible et/ou ultraviolet dit UV dans l'épaisseur de la première feuille, la première feuille jouant alors le rôle de guide de la lumière injectée, (le bord d'injection éventuellement étant en partie évidé dans son épaisseur voire avec un décrochement),
- des moyens pour former au moins une zone lumineuse tels que:
   - des moyens d'extraction de la lumière guidée via la première et/ou la deuxième face principale, qui sont des moyens de diffusion en surface de la première et/ou de la deuxième face principale ou des moyens de diffusion en volume dans la première feuille,
   - et/ou lorsque la lumière injectée est (notamment) UV, des moyens de conversion de la lumière UV en lumière visible via la première et/ou la deuxième face principale, qui sont des luminophores notamment sur la première et/ou de la deuxième face principale (alors face d'extraction),
   - un éventuel élément fonctionnel périphérique rapporté (donc distinct de la première feuille), lié à la première feuille (notamment par une face interne et l'élément ayant notamment une face libre externe), qui est étanche au(x) fluide(s), notamment à l'eau liquide voire vapeur, l'élément fonctionnel étant par exemple adjacent au bord d'injection, élément fonctionnel qui est choisi parmi un surmoulage ou un élément prémonté (métallique ou polymérique), en particulier choisi élément fonctionnel parmi un encapsulât (souple, tel que du PU par exemple ou rigide comme du PC notamment noir/opaque), un extrudât, un joint, notamment collé sur la première feuille)
- un capot de couverture de la source, étanche au(x) fluide(s), notamment à l'eau liquide voire vapeur,
- le capot dit facial, c'est à dire essentiellement (ou entièrement) en regard (au-dessus de) de la deuxième face, solidaire par des moyens de fixation
   - à la première feuille (de préférence par la deuxième face), notamment en verre organique (bimatière),
   - et/ou à une pièce de liaison liée à la première feuille, pièce de liaison en métal ou plastique suffisamment rigide, par exemple partie noire en polycarbonate sur la première feuille en polycarbonate transparent ou une pièce évidée monoface à contour fermé tel qu'un cadre,
   - et éventuellement à l'élément fonctionnel (par sa face externe), notamment suffisamment rigide
      le capot et le support de diodes étant démontables du vitrage (capot et support seuls ou capot porteur du support)
      le capot ayant une face générale dite interne orientée vers la deuxième face, notamment sur la deuxième face de la première feuille par exemple organique, bimatière noire et transparente éventuellement le capot étant associé à un élément interfacial, pour l'étanchéité interfaciale au(x) fluide(s), notamment à l'eau liquide voire vapeur qui est agencé
      - entre le capot et la pièce de liaison et/ou éventuellement entre le capot et l'élément fonctionnel (avec un bord dit bord d'appui),
      - ou intégré au capot, ou intégré à la pièce de liaison ou intégré à la première feuille,
      - ou entre le capot et la feuille de verre (organique, partie noire par exemple)
   et le support de diodes au moins est pourvu, avantageusement avant son intégration dans le vitrage, d'au moins une couche de protection contre l'humidité et/ou d'une encapsulation telle qu'un vernis de type silicone, époxy ou acrylique.

Ainsi la présente invention propose un vitrage lumineux durable, même lorsque le vitrage n'est pas protégé par la carrosserie, ceci grâce aux moyens d'étanchéité simples et adaptés, supprimant des chemins de diffusion de fluide(s).

Le capot étanche associé à l'étanchéité interfaciale est facile à (re)positionner, retirable (démontable, remplaçable à moindre cout) si nécessaire :
- pour changer la source de lumière (des DEL etc) et/ou leur pilotage électronique lors de réparation, ou de recyclage ou encore
- pour faire face à de nouvelles d'exigences de performances optiques souhaitées par le client (changement de couleur(s), de puissance, de fréquence, de commande) ou par de nouvelles normes imposées,
- et/ou pour (r)ajouter des sources (DEL et/ou fibre optique) et/ou des pilotages électroniques dans un vitrage avec l'évidement et les tels moyens d'étanchéité selon l'invention.

L'invention facilite ainsi la modularité de l'éclairage proposé sur le vitrage (vitrage éclairant ou pouvant de le devenir, variation de couleur, intensité...) - au niveau de la gestion logistique des flux en production (montage en dépôt avancé plutôt qu'à la demande du client).

L'invention réduit l'impact de l'intégration de la source (DEL etc) sur le choix des procédés et matières et permet de ne pas être dépendant d'une technologie de réalisation car elle offre un large panel de solutions d'encapsulation ou de pré-montage utilisables.

Par ailleurs, la solution selon l'invention est souple, car le capot peut être mis en place indépendamment de la source (par exemple de la ou des barrettes de DEL).

L'invention rend possible la fabrication d'un vitrage lumineux de véhicule avec un éventuel élément fonctionnel, rapporté sur le vitrage de manière habituelle, notamment fabriqué selon les techniques habituelles (extrudé, moulé...), l'élément fonctionnel pouvant être modifié de manière appropriée (évidé) pour servir d'appui au capotage en post montage.

Le capot, dans certaines configurations, n'est pas visible après montage sur la carrosserie du véhicule.

Le support de diodes au moins (voire les puces) est pourvu, avantageusement avant son intégration dans le vitrage (lors de leur fabrication...), d'au moins une couche de protection mono ou multicouche) contre l'humidité et/ou d'une encapsulation telle qu'un vernis de type silicone, époxy ou acrylique.

Cela permet une intégration aisée dans le logement prévu dans le vitrage (intégration ne nécessitant pas une gestion complexe de l'étanchéité entre l'évidement et le milieu extérieur).

Plus précisément, la couche de protection protège au moins circuit imprimé, soudures, connecteurs si pas étanches.

Les diodes (au moins la face émettrice) sont de préférence pas protégées ainsi si déjà recouvertes (pré encapsulées) de silicone.

On protège les barrettes de LEDs avant de les intégrer dans le logement (évidement de l'élément fonctionnel etc). La protection peut être du type vernis de protection (silicone, epoxy, acrylique...), encapsulation ou « potting » de la barrette de LEDs (silicone, epoxy, acrylique...).

On peut citer les vernis de tropicalisation vendu par Syneo, avec une base acrylique ou PU ou Silicone.

On peut citer le vernis de protection Abchimie. La dépose est par immersion, dépose sélective ou vaporisation (couches de 25-50 microns).

Grâce à la couche de protection, l'étanchéité parfaite entre la surface du capot et l'entourage n'est plus indispensable mais peut venir en complément. On peut aussi cumuler les deux solutions d'étanchéité pour plus de sécurité, ou alors pour éviter une dégradation du module due à l'humidité dans l'air emprisonné dans la cavité une fois le capot monté.

A tout le moins, le capot n'est pas nécessairement étanche (aux fluides). Il protège de préférence des entrées de matière qui viendrait se mettre entre les diodes et la tranche d'injection mais pas d'étanchéité à l'humidité et à l'eau liquide nécessaire. Le capot peut être percé pour le passage de fil par exemple.

Ainsi on facilite la conception de l'interface entre le capot et l'élément d'assemblage et on facilite le procédé de fabrication du vitrage.

Par ailleurs, le capot et l'élément d'étanchéité interfaciale selon l'invention sont utiles en particulier pour une protection contre l'humidité de la source, notamment des puces, pour éviter une pollution de l'espace de couplage (salissures, pollution organique, type moisissures...) et de préférence aux produits de nettoyage, ou à un lavage par jet à haute pression. Cette protection doit être pérenne.

Pour qualifier l'étanchéité à l'humidité à long terme on peut recourir au test cataplasme humide. Par exemple la norme D47 1165-H7 utilisée dans l'automobile décrit le test de cataplasme humide H7.

Ce test consiste à noyer la pièce à tester dans du coton imbibé d'eau déminéralisée et à enfermer le tout dans un sac hermétique, puis à le placer en étuve à 70+/- 2°C pendant 7 jours. Ensuite les pièces sont sorties, débarrassées du coton trempé et placées à 20°C pendant 2 heures. Les pièces peuvent enfin être observées et testées mécaniquement ou fonctionnellement pour évaluer l'effet de l'humidité sur le système. Ce test correspond à plusieurs années de vieillissement naturel en milieu humide et chaud.

On peut aussi utiliser un test de nettoyage par jet d'eau haute pression, comme le test de résistance au lavage par nettoyeur haute pression D25 5376 utilisé dans l'automobile : pression jusqu'à 100 bars avec une distance buse/caisse jusque 100 mm.

La solution selon l'invention mettant en oeuvre un ensemble de moyens pour l'étanchéité est préférée à une encapsulation totale « monolithique », notamment de surmoulage (encapsulât..) ou par un enrobage de colle, d'adhésif, dans laquelle la source lumineuse (comme par exemple les barrettes de DEL) seraient entièrement encapsulées solution rendant la source lumineuse difficilement accessible sous peine de l'abimer.

En outre, l'encapsulation totale est délicate et peut détériorer la source en particulier les LEDS (et/ou leur circuit électronique) déjà montées, induisant des coûts de rebuts important, sauf à prendre des précautions rendant la fabrication complexe.

De la même façon, l'intégration de la source telle qu'une barrette à LEDs est difficile voire impossible dans le cas d'une extrusion ou d'une pièce moulée du fait du risque de dégradation de la fonction lumière.

Dans un mode de réalisation avantageux, simple à réaliser, la première feuille est en verre notamment organique, notamment en PC, avec un trou borgne dans son épaisseur, de la deuxième face, par exemple un décrochement, pour loger la source en regard du bord d'injection.

Dans une feuille en verre organique, notamment en plastique (PC etc), on peut en effet pratiquer plus facilement un trou, une rainure que dans une feuille en verre minérale, notamment trempée.

Dans un mode de réalisation préféré, le trou est sur tout le pourtour de la deuxième face et le capot forme un cadre notamment intégrant lesdits moyens de fixation (par vissage ou clipsage etc).

La section du capot peut être alors par exemple en L, en U, intégrer lesdits moyens de fixation par exemple de type vissage, clipsage, rivetage, collage.

Le vitrage comprend un élément de masquage de la source et d'éventuelle lumière parasite (notamment en face opposée à la face d'extraction, à proximité de la zone d'injection), et/ou de masquage de la fixation du vitrage à la carrosserie du véhicule par la deuxième face, l'élément de masquage pouvant être :
- une partie d'élément fonctionnel, notamment une encapsulation polymérique (suffisamment opaque, noire),
- et/ou un émail suffisamment opaque, sur la périphérie de la deuxième face et/ou sur la première face ou une face d'un film en feuille rapporté en regard de la première face notamment lorsque l'élément fonctionnel est monoface ou biface,
- et/ou une surface réfléchissante (couche ...) sur la périphérie de la deuxième face et/ou sur la première face ou une face rapportée en regard de la première face

En particulier, la première feuille est organique, bimatière transparente et opaque, notamment en polycarbonate :
- la zone opaque de la première feuille sur la périphérie de la deuxième face et/ou sur la première face, forme un masquage de la source et d'éventuelle lumière parasite (à proximité de l'injection), donc l'élément fonctionnel et/ou éventuellement ladite pièce de liaison avec le polycarbonate transparent de la première feuille.
- et/ou forme un masquage de la fixation du vitrage à la carrosserie du véhicule par la deuxième face, donc l'élément fonctionnel et/ou éventuellement ladite pièce de liaison avec le polycarbonate transparent de la première feuille.

De manière avantageuse le vitrage peut comporter plusieurs sources, notamment groupes desdites diodes réparties sur plusieurs profilés (donc plusieurs barrettes de diodes),
- un capot et un élément d'étanchéité interfaciale sont prévus pour chaque groupe (barrette) de diodes,
- et/ou le capot et l'élément d'étanchéité interfaciale étant communs à plusieurs (barrettes) groupes de diodes.

De préférence la distance entre la face interne du capot et la première face est inférieure à 10 mm.

De préférence, la distance entre la face externe du capot le bord ou la tranche d'injection est inférieure à 15 mm. L'épaisseur du capot peut être inférieure à 5mm.

Par ailleurs, l'espace des rayonnements émis avant injection, dit espace de couplage, varie naturellement en fonction du diagramme de rayonnement de la source, défini par une direction principale d'émission et un cône d'émission.

On peut prévoir une matière de remplissage de l'espace de couplage transparente au(x)dit(s) rayonnement(s) adhésive ou non, notamment :
- une mousse, une résine thermoplastique,
- une matière adhésive, de type colle, noyant les puces et fixant les puces au vitrage,
- un adhésif double face, collé sur les puces et le support par une face adhésive et collé au vitrage par l'autre face adhésive.

Comme matières adhésives (polymères etc) remplissant si nécessaire une fonction d'étanchéité à court terme, on peut citer :
- colle réticulable aux UV,
- une bande (acrylique, PU..) adhésivée avec colle acrylique,
- une colle transparente, PU, silicone, acrylique,
- une résine thermoplastique : polyvinyl butyral (PVB), copolymère éthylène/acétate de vinyle (EVA) ...

Toutefois l'invention permet d'éviter l'ajout d'un élément supplémentaire tel que précité (matière de remplissage et/ou adhésive et/ou matière étanchéité) pour réaliser le couplage optique entre les DEL (nues ou pré-encapsulées) et le vitrage. De tels éléments engendrent un surcoût et sont susceptibles de modifier la couleur de la lumière.

On préfère que l'espace des rayonnements émis avant injection, dit espace de couplage soit gazeux (un ou plusieurs gaz, par exemple de l'air) et/ou l'élément d'étanchéité interfaciale au(x) fluide(s), local, est en périphérie de la face interne du capot ou sur un côté du capot, notamment l'élément d'étanchéité interfaciale au(x) fluide(s) forme un cordon.

Les diodes peuvent être (pré) encapsulées, c'est-à-dire comprenant une puce semi-conductrice et une enveloppe, par exemple en résine type époxy ou en PMMA, encapsulant la puce et dont les fonctions sont multiples : élément diffusant ou de focalisation, conversion de longueur d'onde. L'enveloppe est commune ou individuelle.

Les diodes peuvent être de préférence simples puces semi-conductrices par exemple de taille de l'ordre de la centaine de µm ou du mm.

Les diodes peuvent éventuellement comprendre une enveloppe protectrice (provisoire ou non) pour protéger la puce lors de manipulations ou pour améliorer la compatibilité entre les matériaux de la puce et d'autres matériaux.

La diode peut être choisie notamment parmi au moins l'une des diodes électroluminescentes suivantes :
- une diode à émission latérale, c'est-à-dire parallèlement aux (faces de) contacts électriques, avec une face émettrice latérale par rapport au support, par exemple le support est facial (parallèle à la feuille) comme le capot
- une diode dont la direction principale d'émission est perpendiculaire ou oblique par rapport la face émettrice de la puce.

Le diagramme d'émission d'une source peut être lambertien.

Le vitrage peut ainsi intégrer toutes fonctionnalités connues dans le domaine du vitrage. Parmi les fonctionnalités rajoutées sur le vitrage, on peut citer : couche hydrophobe/oléophobe, hydrophile/oléophile, photocatalytique antisalissure, empilement réfléchissant le rayonnement thermique (contrôle solaire) ou infra rouge (bas-émissif), antireflet.

Le profilé support peut être un PCB classique ou être métallique. Le profilé support peut avoir une section rectangulaire.

Le nombre total de diodes, la puissance des diodes sont choisies par la taille et la localisation des zones à éclairer, par l'intensité lumineuse souhaitée et l'homogénéité de lumière requise.

La longueur du profilé support varie en fonction du nombre de diodes et de l'étendue de la surface à éclairer.

Le profilé support de DEL a une longueur par exemple de l'ordre de 20 cm. On multiplie de préférence le nombre de barrettes de DEL (profilé + DEL) pour couvrir la surface.

Pour davantage de compacité et/ou une conception simplifiée, le profilé support peut présenter en outre l'une ou les caractéristiques suivantes :
- être mince, notamment d'épaisseur inférieure ou égale à 1 mm, voire à 0,1 mm,
- avoir un revêtement de surface métallique pour une conduction électrique,

On peut prévoir plusieurs profilés supports à diodes identiques ou similaires au lieu d'un seul profilé support notamment si les zones à éclairer sont très distantes entre elles ou pour éclairer une large zone.

On peut prévoir un profilé support avec une taille de référence donnée multiplié en fonction de la taille du vitrage et des besoins.

Pour davantage de compacité et/ou pour augmenter la zone de clair de vitre, la distance entre la partie porteuse des puces et la première feuille est de préférence inférieure ou égale à 5 mm, et de préférence la distance entre les puces et la première feuille est inférieure ou égale à 2 mm.

La fixation de la source au vitrage peut être également réalisée en dehors de l'espace de couplage, notamment en dehors du bord d'injection et pour les diodes par la fixation du profilé support, notamment par collage ou adhésif double face ou clipsage sur l'une des faces de la première feuille, notamment la deuxième face, et/ou sur la face interne du capot.

Comme moyens de fixation « permanents » du support au capot, on peut choisir un collage, une soudure, ou encore un bouterollage, en fonction du type de pièce.

Pour faciliter le démontage voire le remplacement du capot, l'élément d'étanchéité interfaciale, de préférence en périphérie du capot, est une colle réversible ou du scratch, faisant partie ou constituant lesdits moyens de fixation du capot alors réversibles, de préférence un cordon de colle arrangé en cordon notamment en contact avec la face interne du capot ou la pièce de liaison (par sa face libre externe) ou la deuxième face, notamment colle de type epoxy bi-composant.

Comme colle réversible, on peut citer des époxys notamment bicomposants par exemple les produits de la gamme ElectRelease™ de la société EIC Laboratories.

Pour faciliter le démontage et le remontage, l'élément d'étanchéité interfaciale, de préférence en périphérie du capot, est une matière comprimée, l'étanchéité par compression de la matière étant réalisée par un effort de fermeture desdits moyens de fixation du capot, notamment l'élément d'étanchéité interfaciale est choisi parmi :
- un joint polymérique par exemple en TPE, en EPDM notamment un joint torique, à lèvre(s) d'étanchéité, le joint étant notamment dans une rainure du capot (sur la face interne du capot ou dans une rainure sur un côté du capot) ou de la deuxième face ou de la pièce de liaison,
- un profil d'étanchéité sur la pièce de liaison, choisie polymérique, par exemple lèvre(s), notamment en EPDM, ou sur la face interne ou un côté du capot choisi polymérique ;
- une mousse éventuellement adhésivée (au capot ou à la pièce de liaison ou à la deuxième face) notamment mousse acrylique, PU, caoutchouc (EDPM..), thermoplastiques élastomères, en TPE, en polyester, notamment en polyester caoutchouc monocomposant tel que le produit Dynafoam vendu par la société Saint-Gobain Performance Plastics.

On peut ainsi s'affranchir de l'usage d'adhésif d'étanchéité.

Dans un premier mode de réalisation avantageux, de préférence en relation avec l'étanchéité par compression, les moyens de fixation du capot sont réversibles, les moyens de fixation sont choisis parmi :
- des moyens de clipsage, ponctuels (ergots ...) ou étendus (c'est-à-dire s'étendant sur toute la longueur du capot), agencés sur le capot (face interne..), de préférence faisant partie intégrante du capot, (de préférence dans la zone d'étanchéité définie par l'élément d'étanchéité interfaciale), et notamment reçus pour le clipsage dans une ou des zones d'accueil dans la première feuille notamment organique, et/ou de la pièce de liaison et éventuellement reçus en outre dans l'élément fonctionnel ;
- des moyens de clipsage, de type crochet, faisant partie intégrante du capot, de préférence en dehors dans la zone d'étanchéité et notamment reçus dans une ou des zones d'accueil de la première feuille notamment organique, et/ou de la pièce de liaison et éventuellement reçus en outre dans l'élément fonctionnel ;
- des moyens de vissage, (tels que vis, boulon) par exemple dépassant de la face interne, (par exemple logés dans des perforations du capot ou faisant partie intégrante du capot facial, éventuellement via des trous borgnes), de préférence dans la zone d'étanchéité, entre l'élément d'étanchéité interfaciale et le bord de l'évidement.

On peut ainsi s'affranchir de l'usage d'adhésif de fixation.

La pièce de liaison peut former une pièce évidée monoface à contour fermé tel qu'un cadre.

Le capot, peut être une pièce de forme générale sensiblement plane. Le capot peut être un enjoliveur, (notamment de la couleur de carrosserie du véhicule), ou être masqué après fixation du vitrage à la carrosserie, capot par exemple le long d'un bord ou formant un cadre.

Le capot peut comprendre en outre des moyens de maintien dudit profilé et/ou un évidement pour le passage de la connectique et/ou des moyens de positionnement du profilé support des diodes (par exemple des rainures, des butées locales.., des plots).

Le capot peut comprendre en outre :
- l'intégration éventuelle des fils et connectiques d'alimentation électriques (par exemple d'une barrette de diodes à l'autre) préalablement à l'intégration des diodes (surmoulage des fils ou prévoir des gorges...),
- de faciliter la sortie des fils par rapport à des connecteurs de l'alimentation principale (pouvant être la batterie, une source photovoltaïque...) au niveau de la zone de capotage par le biais d'une broche intégrée.

De préférence, le facteur de transmission de la première feuille autour du pic du rayonnement des puces (perpendiculairement aux faces principales) est supérieur ou égal à 50%, encore plus préférentiellement supérieur ou égal à 70%, et même supérieur ou égal à 80%.

Le vitrage peut avoir une couche dite protectrice (une feuille, un film, un dépôt...) sur l'une des première ou deuxième faces ou s'étendant sur ladite face. Cette couche peut avoir une fonction double :
- diffusion de lumière (par exemple film souple en PU, PE, silicone éventuellement collé par acrylique),
- protection aux rayonnements (IR, UV) : contrôle solaire, basse émissivité...,
- anti rayures,
- esthétique (teintée, avec motifs etc).

On peut prévoir de préférence pour le ou les bords de couplage de la première feuille des bords arrondis. En particulier dans le cas où l'espace des rayonnements émis est de l'air, il est possible de tirer parti de la réfraction au niveau de l'interface air/première feuille de géométrie appropriée (bord arrondi, voire même biseauté...) permettant ainsi de focaliser les rayons dans la première feuille.

Le verre peut avoir éventuellement préalablement subi un traitement thermique du type durcissement, recuit, trempe, bombage.

Le vitrage est simple, la première feuille étant en verre minéral ou organique, notamment en PC, PMMA, PU, résine ionomère, polyoléfine, éventuellement bimatière.

Le vitrage peut être feuilleté (plusieurs feuilles) formé :
- d'une première feuille transparente, verre minéral (flotté etc) ou organique (PC, PMMA, PU, résine ionomère, polyoléfine), épaisse ou mince,
- d'un intercalaire de feuilletage en matériau de feuilletage donné,
- d'une deuxième feuille (opaque ou non, transparente, teintée, en verre minéral, ou organique à fonctionnalités diverses : contrôle solaire..).

Comme intercalaire de feuilletage usuel, on peut citer le PU utilisé souple, un thermoplastique sans plastifiant tel que le copolymère éthylène/acétate de vinyle (EVA), le polyvinylbutyral (PVB). Ces plastiques ont par exemple une épaisseur entre 0,2 mm et 1,1 mm, notamment 0,38 et 0,76 mm.

On peut notamment choisir comme première feuille / intercalaire / deuxième feuille :
- verre minéral / intercalaire / verre minéral,
- verre minéral / intercalaire / polycarbonate,
- polycarbonate (épais ou non) / intercalaire / verre minéral.

Dans la présente description, en l'absence de précision, on entend par verre, un verre minéral.

On peut découper le bord de la première feuille (détourage avec évidements avant trempage) d'un vitrage simple ou feuilleté ou d'un double vitrage pour y loger les diodes.

Les premières et/ou deuxième feuilles peuvent être de toute forme (rectangulaire, carré, rond, ovale,...), et être planes ou galbées.

La première feuille peut être préférentiellement en verre sodocalcique, par exemple en verre PLANILUX de la société SAINT GOBAIN GLASS.

La deuxième feuille peut être colorée par exemple en verre VENUS de la société SAINT GOBAIN GLASS.

Le vitrage feuilleté comprend une deuxième feuille, notamment en verre minéral ou organique est feuilletée par un intercalaire de feuilletage à la première feuille et de préférence la tranche de la première feuille comporte un évidement marginal traversant dans l'épaisseur où est logée la source, ou la deuxième feuille est dépassante du bord d'injection de la première feuille, créant un décrochement latéral du vitrage,

Le vitrage peut être un vitrage multiple isolant, sous vide, notamment double ou triple vitrage formé :
- d'une première feuille transparente, verre minéral (flotté etc) ou organique (PC, PMMA, PU, résine ionomère, polyoléfine), épaisse ou mince,
- d'une deuxième feuille espacée par une lame de gaz (air ou gaz inerte) (opaque ou transparente, teintée, en verre minéral ou organique à fonctionnalités diverses : contrôle solaire..).
- d'une éventuelle troisième feuille espacée par une lame de gaz (air ou gaz inerte) (opaque ou transparente, teintée, en verre minéral, ou organique à fonctionnalités diverses : contrôle solaire...).

Le vitrage est un vitrage multiple, notamment un vitrage feuilleté, un double vitrage sous vide ou isolant, ou encore un triple vitrage la première feuille étant une feuille externe ou centrale du triple vitrage.

Pour l'extraction de la lumière on emploie des moyens de diffusion, formés soit par un traitement superficiel de la feuille de verre du type sablage, attaque acide, dépôt d'émail ou de pâte diffusante, soit par un traitement dans la masse du verre de type gravure laser.

La couche diffusante peut être composée d'éléments contenant des particules et un liant, le liant permettant d'agglomérer entre elles les particules. Les particules peuvent être métalliques ou des oxydes métalliques, la taille des particules peut être comprise entre 50 nm et 1 µm, de préférence le liant peut être minéral pour une résistance à la chaleur.

Dans un mode de réalisation préféré, la couche diffusante est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns. Cette couche diffusante préférée est particulièrement décrite dans la demande WO0190787.

Les particules peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes.

Par exemple, on choisit une couche minérale diffusante d'environ 10 µm.

Pour davantage de compacité et/ou pour réduire ou augmenter la zone de clair de vitre, la distance de la face émettrice et de la première feuille peut être inférieure à 2 mm. Notamment, on peut utiliser des diodes d'encombrement réduit par exemple des puces sans lentille et/ou sans pré-encapsulation notamment de largeur de l'ordre de 1 mm, de longueur de l'ordre de 2,8 mm, de hauteur de l'ordre de 1,5 mm.

L'élément fonctionnel éventuel peut présenter une ou des fonctionnalités standards pour le vitrage de véhicule.

La fonctionnalité (simple ou multiple) de l'élément fonctionnel peut être l'une ou les suivantes :
- cadre du vitrage (monoface, biface, triface), notamment de largeur sur la première face de 3 à 100 mm, de 10 à 40 mm d'épaisseur, et/ou
- pièce porteuse d'éléments de fixation ou de centrage (c'est-à-dire pour un bon positionnement du vitrage sur la carrosserie du véhicule lors du montage du vitrage chez le constructeur),
- pièce d'étanchéité au(x) fluide(s) (eau liquide, vapeur, produits de nettoyage...) entre le vitrage et la carrosserie du véhicule, au moins limitant le passage des fluides entre le vitrage et la carrosserie du véhicule,
- pièce opaque et/ou de masquage,
   et/ou
- pièce (ponctuelle) de maintien d'éléments mécaniques (« holder » de vitre latérale...).

L'élément fonctionnel périphérique est lié à la première feuille. L'élément fonctionnel peut être un encapsulât, un extrudât, un joint prémonté (lécheur), une pièce moulée, injectée....

L'élément fonctionnel est directement sur la première feuille ou indirectement par exemple via un élément, de renfort, d'adhésion.

L'élément fonctionnel peut être ainsi lié au vitrage par tout moyen :
- adhésion directe de la matière (moulée...),
- pincement ou chaussement,
- moyen de liaison de type collage, etc.

L'élément fonctionnel peut être monoface c'est-à-dire seulement :
- sur la deuxième face,
- sur la tranche de la première feuille, dans le cas d'un vitrage feuilleté ou d'un double ou triple vitrage (surtout dans les bus et dans le ferroviaire ou encore pour l'aérien) sur tout ou partie la tranche du vitrage.

L'élément fonctionnel peut être :
- biface : sur la deuxième face et sur la tranche ou sur la première face et sur la tranche
- voire triface : sur la première face, sur la tranche d'au moins la première feuille (ou du vitrage) et sur la deuxième face de la première feuille.

L'élément fonctionnel sur la deuxième face peut servir pour masquer la source et même de la lumière parasite.

Le vitrage lumineux de véhicule comporte ainsi un élément fonctionnel surmoulé, polymérique, et de préférence entre l'encapsulation et le vitrage, notamment en verre minéral, une couche de primaire, mono, bi ou tri-composants, par exemple à base de polyuréthane, polyester, polyvinyle acétate, isocyanate.

Comme déjà vu, l'élément fonctionnel peut être une encapsulation polymérique, notamment épaisse de 0,5 mm à plusieurs cm, obtenue par surmoulage.

Dans les applications de véhicules, la matière d'encapsulation est généralement noire ou colorée (pour des fins esthétiques et/ou de masquage). L'encapsulation peut être en polyuréthane, notamment en PU-RIM (Reaction In Mold en anglais). D'autres matières de surmoulage sont :
- les thermoplastiques souples :
- thermoplastique élastomère (TPE), notamment composés à base de styrène éthylène butadiène styrène SEBS/ polypropylène (PP), thermoplastique TPU, polypropylène PP/EPDM,
- polyvinyle chlore (PVC), terpolymère éthylène-propylène-diène (EPDM),
- thermoplastiques rigides :
- polycarbonate (PC), polyméthacrylate de méthyle (PMMA), polyéthylène (PE), polypropylène (PP), polyamide (PA66), acrylonitrile butadiène styrène (ABS), et leurs alliages ABS-PC, polystyréne (PS), acrylonitrile styrène acrylate ASA,

La matière de surmoulage peut être colorée, chargée des fibres de verre.

La couche de primaire, mono, bi ou tri-composants, est par exemple à base de polyuréthane, polyester, polyvinyle acétate, isocyanate ..., par exemple épaisse de 5 à 50 µm, entre l'encapsulation et le vitrage en particulier en verre minéral, car cette couche favorise l'adhésion à un verre minéral.

L'élément fonctionnel (surmoulé) apporte également une bonne finition esthétique et permet d'intégrer d'autres éléments ou fonctions :
- surmoulage de cadres,
- inserts de renforcement ou inserts de fixation du vitrage, notamment pour les vitrages ouvrants,
- profil d'étanchéité à lèvres multiples (double, triple ...), s'écrasant après montage sur la carrosserie.
- enjoliveur.

L'élément fonctionnel surmoulé peut être de toute forme, avec ou sans lèvre.

Un tubing, autrement dit un profil d'étanchéité à cellules fermées, peut aussi être accolé à l'élément fonctionnel surmoulé.

De préférence pour un toit, on réalise une encapsulation flush, c'est-à-dire affleurante à une des faces du vitrage, la deuxième face de préférence

Le vitrage lumineux de véhicule peut comprendre un élément fonctionnel qui est une pièce monoface sur la deuxième face, notamment un surmoulage ou une pièce (joint, cadre) collée, une pièce avec un support de fixation (X) d'un élément de véhicule sur le vitrage ou du vitrage sur un élément de véhicule, le long d'au moins un bord d'injection voire d'au moins deux bords opposés du vitrage.

L'élément fonctionnel peut être un joint polymérique, de préférence en élastomère, notamment en TPE (pour thermoplastique élastomère), ou EPDM, épais de quelques mm (typiquement entre 2 et 15 mm).

Le joint peut être adhésivé pour son maintien. Le joint peut préférablement tenir simplement par pincement ou par chaussage ou par clipsage (2 demi-cadres par exemple). Le joint peut être monoface, biface, triface. Le joint peut former un cadre. Le joint peut être de toute forme : en L, en U... Le joint peut être démontable à tout moment. Il peut comporter par une ou plusieurs de lèvres mises en contrainte après fixation.

L'élément fonctionnel peut être métallique ou polymérique, polypropylène (PP), polyamide (PA66), polybutylène téréphtalate (PBT) ... chargé ou non de fibres de verre.

La ou les zones lumineuses, (notamment périphérique le long d'un bord du vitrage ou de bords opposés ou adjacents, en bande(s), encadrant le vitrage), on forme un éclairage interne d'ambiance, un éclairage interne de lecture par vitre latérale, toit ...), un affichage lumineux de signalisation interne et/ou externe.

La ou les zones lumineuses, notamment sont périphériques, en bande(s) encadrant le vitrage.

On ajuste l'extraction/la conversion des rayonnements (ainsi que le type et/ou la position et/ou le nombre des diodes) pour :
- un éclairage d'ambiance, de lecture, notamment visible à l'intérieur du véhicule,
- une signalisation lumineuse notamment visible à l'extérieur :
   - par activation de télécommande : détection du véhicule dans un parking ou autre, indicateur de (dé)verrouillage de portes, ou
   - signalisation de sécurité, par exemple comme feux stop sur l'arrière,
- un éclairage sensiblement homogène sur toute la surface d'extraction (une ou plusieurs zones d'extraction, fonction commune ou distincte).

La lumière peut être :
- continue et/ou par intermittence,
- monochromatique et/ou plurichromatique.

Visible à l'intérieur du véhicule, elle peut ainsi avoir une fonction d'éclairage de nuit ou d'affichage d'informations de toutes natures, de type dessin, logo, signalisation alphanumérique ou autres signalétiques.

Comme motifs décoratifs, on peut former par exemple une ou des bandes lumineuses, un cadre lumineux périphérique.

On peut réaliser une seule face d'extraction (interne au véhicule de préférence).

L'insertion de diodes dans ces vitrages permet d'autres fonctionnalités de signalisation suivantes :
- affichage de témoins lumineux de signalisation destinés au chauffeur du véhicule ou aux passagers (exemple : témoin d'alarme de température du moteur dans le pare-brise automobile, témoin de mise en fonctionnement du système de dégivrage électrique, des vitres...),
- affichage de témoins lumineux de signalisation destinés aux personnes à l'extérieur du véhicule (exemple : témoin de mise en fonctionnement de l'alarme du véhicule dans les vitres latérales),
- affichage lumineux sur les vitrages des véhicules (par exemple affichage lumineux clignotant sur les véhicules de secours, affichage de sécurité avec faible consommation électrique signalant la présence d'un véhicule en danger).

Le vitrage peut comprendre une diode réceptrice de signaux de commande, notamment dans l'infrarouge, pour télécommander les diodes.

Le vitrage est destiné à équiper tout véhicule :
- vitre latérale d'un véhicule terrestre, notamment automobile, véhicule utilitaire, camion, train, notamment avec l'élément fonctionnel qui est une pièce de maintien d'un système de lève-vitre ou avec le capot enjoliveur,
- toit mobile ou fixe d'un véhicule terrestre, notamment automobile, véhicule utilitaire, camion, train, avec une première feuille éventuellement galbée, notamment un vitrage feuilleté,
- pare brise d'un véhicule terrestre, notamment automobile, véhicule utilitaire, camion, train, notamment avec la ou les zones lumineuses (formant une signalisation HUD par exemple) dans le cadre en émail ou à proximité, lunette arrière notamment dans le cadre en émail ou à proximité,
- hublot, pare-brise d'un véhicule aérien,
- vitres de fenêtre, toit, d'un véhicule aquatique, bateau, sous marin
- double ou triple vitrage dans un train, un bus.

Naturellement l'invention porte aussi sur un véhicule incorporant le vitrage défini précédemment.

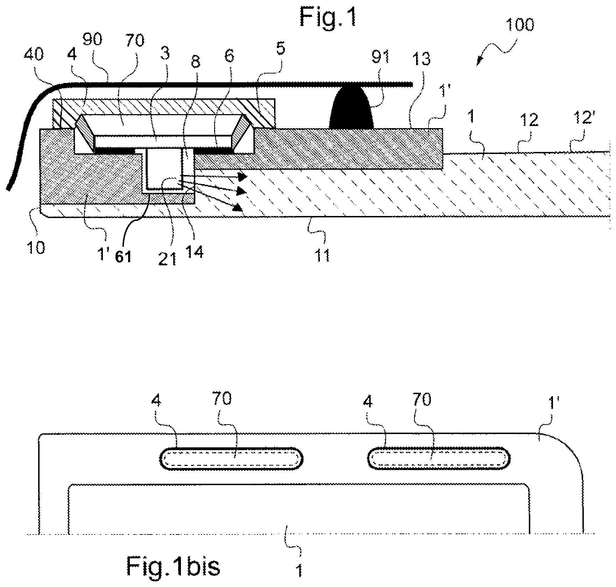

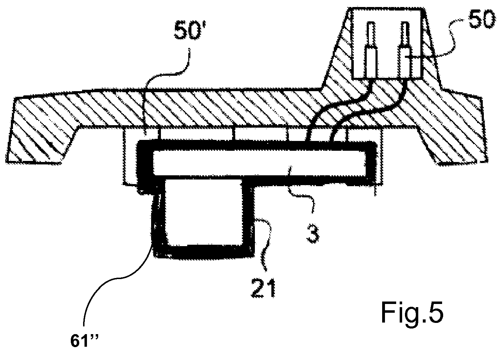

D'autres détails et caractéristiques avantageuses de l'invention apparaissent à la lecture des exemples de vitrages selon l'invention illustrés par les figures suivantes :
▪ Les figures 1 à 4 représentent des vues schématiques partielles de coupe transversale des vitrages lumineux de véhicule dans différents modes de réalisation de l'invention,
▪ La figure 1bis représente une vue schématiques partielle de dessus du vitrage lumineux de véhicule du mode de réalisation de l'invention de la figure 1,
▪ La figure 5 représente une vue schématique de coupe d'un capot selon l'invention.

On précise que pour un souci de clarté les différents éléments des objets représentés ne sont pas nécessairement reproduits à l'échelle.

La figure 1 représente une vue schématique partielle de coupe d'un vitrage lumineux de véhicule 100 dans un premier mode de réalisation de l'invention.

Ce vitrage 100 est un vitrage comportant une première feuille transparente 1, en verre organique, par exemple rectangulaire, présentant une première face principale 11 et une deuxième face principale 12, et une tranche 10, par exemple une feuille polycarbonate bimatière, transparente (guide de lumière) et (en périphérie) opaque.

Deux profilés 3 support de diodes électroluminescentes 2 s'étendent en bordure par exemple longitudinale et sont fixés en périphérie de la deuxième face 12 de la première feuille de verre 1, dans la zone opaque 1' évidée, par un scratch 6 (pour être retiré). Les PCB sont revêtus d'un vernis de tropicalisation 61.

Chaque profilé support 3 est monolithique, mince, d'épaisseur égale à 0,6 mm (5 mm max de préférence), large de 7mm, long de 20 cm. Il peut être de section rectangulaire, métallique ou un PCB classique. La longueur d'appui du profilé sur la deuxième face 12 peut être typiquement inférieure à 7 mm.

En variante, le profilé support de diodes a une section en L, U, J...

Plus précisément, les diodes sont dans un trou 8 (rainure) pratiqué dans la zone opaque 1' de la première feuille 1 sur la périphérie de la deuxième face 12 et le profilé support 3 est en appui dans un évidement 70 plus large que la rainure, dans la zone opaque 1'.

La zone opaque forme un masquage de la source 2, en s'étendant sur la deuxième face masque d'éventuelle lumière parasite, notamment à proximité du bord d'injection 14, et/ou forme un masquage de la fixation 91 du vitrage à la carrosserie 90 du véhicule par la deuxième face 12.

Les diodes électroluminescentes comportant chacune une puce émettrice 2 apte à émettre un ou plusieurs rayonnements dans le visible guidé(s) dans la première feuille 1. Les diodes sont de petites tailles typiquement quelques mm ou moins, notamment de l'ordre de 2x2x1 mm, sans optique (lentille) et non pré-encapsulées pour réduire au maximum l'encombrement ou alors pré encapsulée par de la silicone pour leur protection.

Dans la configuration illustrée, la face émettrice 21 est latérale (normale au profilé 3). On réduit au maximum la distance entre la face émettrice latérale et le bord d'injection 14, par exemple de 5 mm. La distance entre la face émettrice latérale et la tranche est de 1 à 2 mm. La direction principale d'émission est perpendiculaire à la face de la puce semi-conductrice, par exemple avec une couche active à multi puits quantique, de technologie AlInGaP ou autres semi-conducteurs. Le cône de lumière est un cône de type lambertien, de +/-60°.

L'extraction de la lumière 12' peut se faire via la deuxième face 12 qui est par exemple - la face intérieure au véhicule notamment dans le cas d'un toit.

L'extraction 12' est réalisée par tout moyen de diffusion à la surface de la deuxième face 12: sablage, attaque acide, couche diffusante, sérigraphie... ou en variante par gravure laser dans la première feuille 1.

Pour un groupe de diodes donné, on définit un espace des rayonnements émis entre chaque diode (puce) et le bord d'injection de la première feuille, dit espace de couplage optique, de préférence qui est un milieu gazeux, typiquement de l'air.

Chaque puce et l'espace des rayonnements émis doivent être protégés de toute pollution : eau, chimique etc, ceci à long terme comme pendant la fabrication du vitrage 100.

Un capot 4 de couverture des diodes (par exemple un capot par barrette), est facial ayant une face générale dite interne orientée vers la première feuille. Le capot est une pièce plastique de forme générale plane, de contour rectangulaire (avec des bords éventuellement arrondis). Le capot est parallèle à la première feuille et sur la zone opaque 1', de part et d'autre de l'évidement 70.

Pour renforcer l'étanchéité aux fluides de chaque puce, de chaque barrette de diodes, on utilise en outre :
- un élément interfacial pour l'étanchéité interfaciale au(x) fluide(s), agencé entre la face interne du capot et la deuxième face 12 (zone opaque 1') à proximité de l'évidement 70, qui est un joint d'étanchéité 5, en EPDM, en forme de cordon large de 5 mm, dans une rainure 40 sur la première feuille (surface 13 de la zone opaque 1'),
- ou en variante sur la face interne du capot

Le capot est solidaire de la première feuille 1, par des moyens de fixation réversibles par exemple deux vis(non montrées), traversant le capot et dépassant de la face interne.

Ces vis sont reçues dans des zones d'accueil de la première feuille 1, à savoir des trous filetés et de préférence entre le cordon de joint et le bord de l'évidement 70.

L'élément d'étanchéité interfaciale 5 éventuel est alors une matière comprimée, l'étanchéité par compression de la matière étant réalisée par un effort de fermeture desdits moyens de fixation du capot .

Le capot est ainsi facilement démontable pour insérer des diodes ou les changer.

En première variante de capot les moyens de fixation du capot sont deux moyens de clipsage reçus dans des zones d'accueil, de préférence entre le cordon de joint et le bord de l'évidement.

En autre variante de capot les moyens de fixation du capot sont deux moyens de clipsage reçus dans des bords internes délimitant l'évidement 70.

Le profilé support 3 de led 2 est tenu par le capot par exemple par des ailettes ou des crochets 50' (cf. figure 5) maintenant le support avec son potting 61".

Le design du capot permet ainsi l'intégration de la barrette de diodes et permet également la focalisation de la barrette c'est-à-dire le bon positionnement de la barrette par rapport à la tranche d'injection.

Le capot 4 peut comporter en outre des surfaces ou butées pour la référence dans le logement du surmoulage.

En outre le capot 4 est pourvu d'un évidement 50 (rendu étanche par mousse ou joint d'étanchéité ...) pour le passage de la connectique....

On peut choisir des diodes émettant en lumière blanche ou colorée pour un éclairage d'ambiance, de lecture...

On peut bien sûr prévoir plusieurs supports sur des bords distincts, et/ou avec des fonctions distinctes (choix adapté de la puissance, de la lumière émise, de la position et de l'étendue des zones extraction).

L'extraction par exemple une couche diffusante 12' peut former un éclairage d'ambiance.

Le vitrage 100 peut former par exemple un toit panoramique fixe de véhicule terrestre, ou en variante de bateau... Le toit est monté par l'extérieur, sur la carrosserie 90 via un adhésif 91.

La première feuille est du côté intérieur du véhicule. L'extraction est de préférence par la face 12.

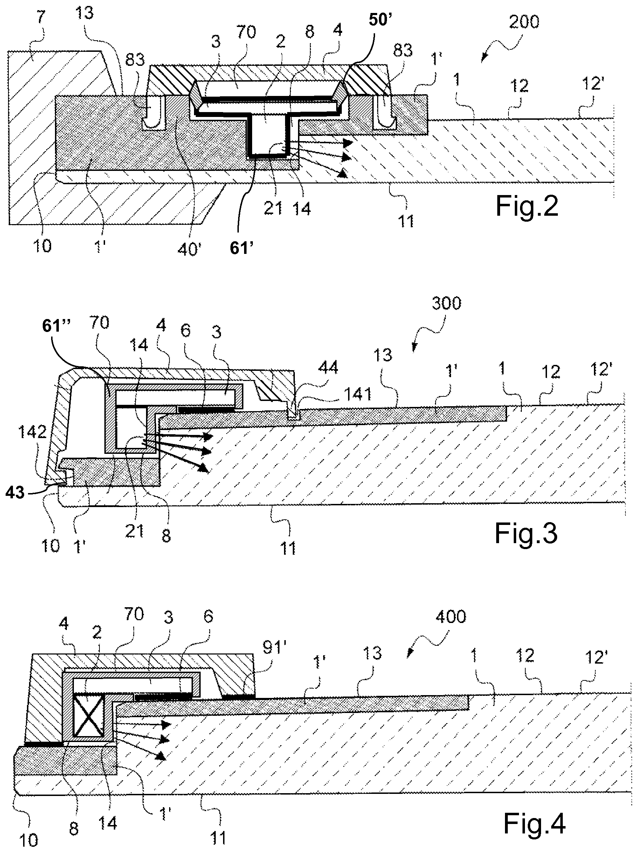

La figure 2 représente une vue schématique partielle de coupe transversale d'un vitrage lumineux de véhicule 200 ans un deuxième mode de réalisation de l'invention.

Le vitrage lumineux de véhicule 200 diffère du vitrage 100 d'abord par la disposition des moyens de fixation 83 qui sont des moyens de clippage reçues dans la première feuille à l'extérieur de l'évidement 70 (surface 13 de la zone opaque 1') et l'élément d'étanchéité interfaciale 5 est remplacé par un vernis 61'.

Par exemple, on pourvoit le vitrage d'un surmoulage polymérique 7, épais de 2,5 mm environ, en bordure du vitrage, et de préférence sur tout le pourtour du vitrage et d'au moins la deuxième face 12.

Le surmoulage 7 sert classiquement de bonne finition esthétique et permet d'intégrer d'autres éléments ou fonctions (inserts de renforcement...).

Le surmoulage 7 par exemple présente une lèvre d'étanchéité entre le vitrage et le véhicule.

Le surmoulage 7 est par exemple en polyuréthane noir, notamment en PU-RIM (Reaction In Mold en anglais).

La figure 3 représente une vue schématique partielle de coupe transversale vitrage lumineux de véhicule 300 dans un troisième mode de réalisation de l'invention.

Le vitrage lumineux de véhicule 300 diffère du vitrage 100 :
- par l'étendue de l'évidement 70 allant jusqu'à la tranche 10 et en outre étant sur le pourtour de la première feuille,
- par l'usage éventuel d'un double cordon d'étanchéité (zone évidée basse et zone non évidée haute de la deuxième face 12),
- les moyens de fixation sont réversibles comprenant des moyens de clipsage avec :
   - un premier ergot 44 dans une première rainure d'accueil 141 sur la deuxième face principale, surface 13 de la zone opaque 1' par exemple,
   - et un deuxième ergot 43 dans une deuxième rainure d'accueil 142 sur la tranche, dans zone opaque 1' par exemple.

La figure 4 représente une vue schématique partielle de coupe transversale d'un vitrage lumineux de véhicule 400 dans un quatrième mode de réalisation de l'invention dans une variante du vitrage 300.

On remplace le double cordon d'étanchéité par de la colle 91' réversible ou du scratch et le capot 4 repose sur la partie évidée, zone opaque 1' par exemple,. L'évidement 70 est partiel. On peut choisir de boucher les extrémités latérales par la colle de préférence réversible.

En variante, on remplace les diodes par une fibre optique avec une face émettrice latérale, fibre posée (calée), par exemple par un profilé support sur la deuxième face La source primaire de lumière peut être une diode (non représentée). On utilise par exemple la fibre optique de 3M dite 3M™ Precision Lighting Elements.

En variante on choisit des LED UV, notamment dans l'UVA, pour exciter des luminophores sur la face 12 par exemple de préférence pour une feuille de verre.

## Revendications

1. Vitrage lumineux de véhicule (100, 200, 300, 400) comportant :
- une première feuille en verre minéral ou organique (1) présentant une première face principale (11) et une deuxième face principale (12,13) et une tranche (10),
- une source lumineuse périphérique (2) avec une face émettrice (21), qui est formé de diodes électroluminescentes (2) comportant chacune une puce semi-conductrice sur un profilé support des diodes (3), la face émettrice étant en regard d'un bord de la deuxième face (12) dit d'injection pour une propagation de la lumière injectée visible et/ou ultraviolet dit UV dans l'épaisseur de la première feuille, la première feuille (1) jouant alors le rôle de guide de la lumière injectée, le bord d'injection éventuellement étant en partie évidé voire avec un décrochement,
- des moyens pour former au moins une zone lumineuse, qui sont :
- des moyens d'extraction de la lumière guidée via la première et/ou la deuxième face principale, qui sont des moyens de diffusion en surface de la première et/ou de la deuxième face principale ou des moyens de diffusion en volume dans la première feuille,
- et/ou lorsque la lumière injectée est UV, des moyens de conversion de la lumière UV en lumière visible via la première et/ou la deuxième face principale, qui sont des luminophores notamment sur la première et/ou de la deuxième face principale,
- un éventuel élément fonctionnel périphérique rapporté (7), lié à la première feuille, qui est étanche au(x) fluide(s), qui est choisi parmi un surmoulage ou un élément prémonté,
- un capot de couverture (4) de la source (2), étanche au(x) fluide(s), notamment à l'eau liquide voire vapeur,
- le capot (4) dit facial, c'est à dire essentiellement en regard de la deuxième face, solidaire par des moyens de fixation (83),
- à la première feuille, notamment en verre organique
- et/ou à une pièce de liaison liée à la première feuille,
- et éventuellement à l'élément fonctionnel, le capot et le support de diodes étant démontables du vitrage,
et le support de diodes au moins est pourvu, avantageusement avant son intégration dans le vitrage, d'au moins une couche de protection contre l'humidité et/ou d'une encapsulation telle qu'un vernis de type silicone, époxy ou acrylique.

2. Vitrage lumineux de véhicule (100, 200, 300, 400) selon la revendication 1 **caractérisé en ce que** le capot ayant une face générale dite interne orientée vers la deuxième face, le capot étant associé à un élément interfacial (5), pour l'étanchéité interfaciale au(x) fluide(s), notamment à l'eau liquide voire vapeur, qui est agencé entre le capot et la pièce de liaison et/ou éventuellement entre le capot et l'élément fonctionnel ou intégré au capot, ou intégré à la pièce de liaison ou intégré à la première feuille ou entre le capot et la feuille de verre (1').

3. Vitrage lumineux de véhicule selon la revendication précédente **caractérisé en ce que** l'élément d'étanchéité interfaciale, de préférence en périphérie du capot (4), est une colle réversible faisant partie ou constituant lesdits moyens de fixation du capot (4) alors réversibles, de préférence un cordon de colle arrangé en cordon notamment en contact avec la face interne du capot ou la pièce de liaison (par sa face libre externe) ou la deuxième face, notamment colle de type époxy bi-composant.

4. Vitrage lumineux de véhicule (100, 200, 300, 400) selon l'une des revendications 1 à 3 **caractérisé en ce que** la première feuille (1) est en verre notamment organique, notamment en PC, avec un trou (70, 8), borgne dans son épaisseur, de la deuxième face (12), par exemple un décrochement, pour loger la source en regard du bord d'injection (14).

5. Vitrage lumineux de véhicule (100, 200, 300, 400) selon l'une des revendications 1 à 4 **caractérisé en ce que** la première feuille organique est bimatière transparente et opaque et la zone opaque (1') de la première feuille (1), sur la périphérie de la deuxième face (12) et/ou sur la première face, les diodes sont dans un trou (8) ou rainure pratiqué dans la zone opaque 1' de la première feuille 1 sur la périphérie de la deuxième face 12 et le profilé support (3) est en appui dans un évidement (70) plus large que la rainure (8) et de préférence le profilé support 3 est tenu par le capot par exemple par des ailettes ou des crochets 50'

6. Vitrage lumineux de véhicule (300) selon la revendication précédente **caractérisé en ce que** le trou (70, 8) est sur tout le pourtour de la deuxième face (12) et le capot (4) forme un cadre notamment intégrant lesdits moyens de fixation.

7. Vitrage lumineux de véhicule (200) selon l'une des revendications précédentes **caractérisé en ce que** le vitrage comprend un élément de masquage de la source et d'éventuelle lumière parasite, et/ou de masquage de la fixation (91) du vitrage à la carrosserie (90) du véhicule par la deuxième face (12), l'élément de masquage pouvant être :
- une partie d'élément fonctionnel, notamment une encapsulation polymérique,
- et/ou un émail suffisamment opaque, sur la périphérie de la deuxième face et/ou sur la première face ou une face d'un film en feuille rapporté en regard de la première face notamment lorsque l'élément fonctionnel est monoface ou biface,
- et/ou une surface réfléchissante sur la périphérie de la deuxième face et/ou sur la première face ou une face rapportée en regard de la première face.

8. Vitrage lumineux de véhicule (100, 200, 300, 400) selon l'une des revendications précédentes **caractérisé en ce que** la première feuille (1,1') est organique, bimatière transparente et opaque et la zone opaque (1') de la première feuille (1), sur la périphérie de la deuxième face (12) et/ou sur la première face, forme un masquage de la source (2) et d'éventuelle lumière parasite, et/ou forme un masquage de la fixation (91) du vitrage à la carrosserie (90) du véhicule par la deuxième face (12).

9. Vitrage lumineux de véhicule (100, 200, 300, 400) selon l'une des revendications précédentes **caractérisé en ce que** l'espace des rayonnements émis avant injection, dit espace de couplage, est gazeux, local, et en périphérie de la face interne du capot (4) ou sur un côté du capot (4).

10. Vitrage lumineux de véhicule (100, 200, 300, 400) selon l'une des revendications précédentes **caractérisé en ce que** la fixation de la source (2) au vitrage est réalisé en dehors de l'espace de couplage, notamment en dehors du bord d'injection (14) et pour les diodes par la fixation du profilé support (3),

11. Vitrage lumineux de véhicule (100, 200, 300, 400) selon l'une des revendications précédentes **caractérisé en ce que** la fixation de la source (2) au vitrage est réalisé en dehors de l'espace de couplage, en dehors du bord d'injection (14) et par la fixation du profilé support (3), notamment par collage ou adhésif double face ou clipsage, sur l'une des faces (11, 12, 13) de la première feuille (1, 1'), notamment organique, notamment la deuxième face (12,13) et/ou sur la face interne du capot (4).

12. Vitrage lumineux de véhicule selon l'une des revendications précédentes **caractérisé en ce que** l'élément d'étanchéité interfaciale, de préférence en périphérie du capot (4), est une colle réversible faisant partie ou constituant lesdits moyens de fixation du capot (4) alors réversibles, de préférence un cordon de colle arrangé en cordon notamment en contact avec la face interne du capot ou la pièce de liaison (par sa face libre externe) ou la deuxième face, notamment colle de type époxy bi-composant.

13. Vitrage lumineux de véhicule (100, 200, 300) selon l'une des revendications précédentes **caractérisé en ce que** les moyens de fixation du capot sont réversibles, les moyens de fixation sont choisis parmi :
- des moyens de clipsage, agencés sur le capot, et notamment reçus pour le clipsage dans une ou des zones d'accueil dans la première feuille notamment organique, et/ou de la pièce de liaison et éventuellement reçus en outre dans l'élément fonctionnel ;
- des moyens de clipsage, notamment de type crochet, faisant partie intégrante du capot, de préférence en dehors dans la zone d'étanchéité et notamment reçus dans une ou des zones d'accueil de la première feuille notamment organique, et/ou de la pièce de liaison et éventuellement reçus en outre dans l'élément fonctionnel;
- des moyens de vissage.

14. Vitrage lumineux de véhicule selon l'une des revendications précédentes **caractérisé en ce que** la pièce de liaison forme une pièce évidée monoface à contour fermé tel qu'un cadre.

15. Vitrage lumineux de véhicule (100, 200, 300, 400) selon l'une des revendications précédentes **caractérisé en ce que** le capot est un enjoliveur, ou le capot (4) est masqué après fixation du vitrage à la carrosserie, capot par exemple le long de bord(s) ou formant un cadre.

16. Vitrage lumineux de véhicule selon l'une des revendications précédentes **caractérisé en ce que** le capot (4) comprend des moyens de maintien (50') dudit profilé (3) et/ou un évidement (50) pour le passage de la connectique et/ou des moyens de positionnement du profilé support des diodes (3).

17. Vitrage lumineux de véhicule (100, 200, 300, 400) selon l'une des revendications précédentes **caractérisé en ce que** le vitrage est simple, la première feuille (1) étant en verre minéral ou organique, notamment en PC, PMMA, PU, éventuellement bimatière (1').

18. Vitrage lumineux de véhicule (100, 200, 300, 400) selon l'une des revendications précédentes **caractérisé en ce que** dans la ou les zones lumineuses forment un éclairage interne d'ambiance, un éclairage interne de lecture, un affichage lumineux de signalisation interne et/ou externe.

## Patentansprüche

1. Leuchtende Fahrzeugverglasung (100, 200, 300, 400), die Folgendes umfasst:
- eine erste Scheibe aus mineralischem oder organischem Glas (1), mit einer ersten Hauptfläche (11) und einer zweiten Hauptfläche (12, 13) und einer Kante (10),
- eine umfängliche Lichtquelle (2) mit einer emittierenden Fläche (21), die aus Licht emittierenden Dioden (2) gebildet ist, die jeweils einen Halbleiterchip auf einem Tragprofil (3) der Dioden umfassen, wobei die emittierende Fläche gegenüber einem Rand der zweiten Hauptfläche (12), Injektionsfläche genannt, liegt, sodass das injizierte sichtbare und/oder ultraviolette Licht, UV-Licht genannt, in der Stärke der ersten Scheibe geleited wird, wobei die erste Scheibe (1) so die Rolle des Leiters des injizierten Lichts spielt, wobei der Injektionsrand eventuell zum Teil ausgehöhlt ist, ja sogar einen Rücksprung aufweist,
- Mittel zum Bilden mindestens einer Lichtzone, nämlich:
- Mittel zum Auskuppeln des geführten Lichts über die erste und/oder die zweite Hauptfläche, die Oberflächendiffusionsmittel der ersten und/oder der zweiten Hauptfläche oder Volumendiffusionsmittel in der ersten Scheibe sind,
- und/oder, wenn das injizierte Licht UV-Licht ist, Mittel zum Umwandeln des UV-Lichts in sichtbares Licht über die erste und/oder die zweite Hauptfläche, die Luminophore, insbesondere auf der ersten und/oder der zweiten Hauptfläche, sind,
- ein eventuelles funktionales umfänglich angefügtes Element (7), das mit der ersten Scheibe verbunden ist, das für Fluid(e) dicht ist, das aus einer Umspritzung oder einem vormontierten Element ausgewählt ist,
- eine Abdeckhaube (4) der Quelle (2), die für Fluid(e) dicht ist, insbesondere für flüssiges Wasser, ja sogar Dampf,
- die Abdeckhaube (4) fazial genannt, das heißt im Wesentlichen gegenüber der zweiten Fläche liegend, durch Befestigungsmittel (83) fest verbunden,
- mit der ersten Scheibe, insbesondere aus organischem Glas,
- und/oder mit einem Verbindungsteil, das mit der ersten Scheibe verbunden ist,
- und eventuell mit dem funktionalen Element, wobei die Abdeckhaube und der Diodenträger von der Verglasung abnehmbar sind,
und wobei mindestens der Diodenträger vorteilhafterweise vor seinem Einbau in die Verglasung mit mindestens einer Schutzschicht vor Feuchtigkeit und/oder einer Kapselung, wie einem Lack vom Typ Silikon, Epoxid oder Acryl, versehen wird.

2. Leuchtende Fahrzeugverglasung (100, 200, 300, 400) nach Anspruch 1, **dadurch gekennzeichnet, dass** die Haube eine allgemeine intern genannte Hauptfläche aufweist, die zur zweiten Fläche gerichtet ist, wobei die Haube mit einem interfazialen Element (5) für die interfaziale Abdichtung gegen Fluid(e) assoziiert ist, insbesondere gegen flüssiges Wasser, ja sogar Dampf, das zwischen der Haube und dem Verbindungsteil und/oder eventuell zwischen der Haube und dem funktionalen Teil eingerichtet oder in die Haube integriert oder in das Verbindungsteil integriert oder in die erste Scheibe oder zwischen der Haube und der Glasscheibe (1') integriert ist.

3. Leuchtende Fahrzeugscheibe nach dem vorstehenden Anspruch, **dadurch gekennzeichnet, dass** das interfaziale Abdichtungselement bevorzugt am Umfang der Haube (4) ein umkehrbarer Klebstoff ist, der zu den Befestigungsmitteln der Haube (4) gehört oder diese bildet, die daher umkehrbar sind, bevorzugt ein Klebstoffstrang, der als Strang insbesondere in Berührung mit der internen Fläche der Haube oder dem Verbindungsteil (durch seine freie externe Fläche) oder der zweiten Fläche eingerichtet ist, insbesondere vom Typ Bi-Komponenten-Epoxid.

4. Leuchtende Fahrzeugverglasung (100, 200, 300, 400) nach einem der Ansprüche 1 bis 3, **dadurch gekennzeichnet, dass** die erste Scheibe (1) aus einem insbesondere organischen Glas, insbesondere aus PC, mit einer Blindbohrung (70, 8) in seiner Stärke, der zweiten Fläche (12) besteht, zum Beispiel aus einem Rücksprung, um die Quelle gegenüber dem Einspritzrand (14) unterzubringen.

5. Leuchtende Fahrzeugverglasung (100, 200, 300, 400) nach einem der Ansprüche 1 bis 4, **dadurch gekennzeichnet, dass** die erste organische Scheibe aus zwei Stoffen durchsichtig und lichtundurchlässig besteht, und die lichtundurchlässige Zone (1') der ersten Scheibe (1), auf dem Umfang der zweiten Fläche (12) und/oder auf der ersten Fläche, die Dioden in einer Bohrung (8) oder Nut liegen, die in der lichtundurchlässigen Zone 1' der ersten Scheibe 1 auf dem Umfang der zweiten Fläche 12 und dem Tragprofil (3) in Auflage in einer Aussparung (70) liegt, die größer ist als die Nut (8), und bevorzugt das Tragprofil 3 von der Haube zum Beispiel durch Rippen oder Haken 50' gehalten wird.

6. Leuchtende Fahrzeugverglasung (300) nach dem vorstehenden Anspruch, **dadurch gekennzeichnet, dass** sich die Bohrung (70, 8) auf dem gesamten Umfang der zweiten Fläche (12) befindet, und die Haube (4) einen Rahmen bildet, der insbesondere die Befestigungsmittel integriert.

7. Leuchtende Fahrzeugverglasung (200) nach einem der vorstehenden Ansprüche, **dadurch gekennzeichnet, dass** die Verglasung ein Element zum Maskieren der Quelle und eines eventuellen Störlichts umfasst, und/oder zum Maskieren der Befestigung (91) der Verglasung an der Karosserie (90) des Fahrzeugs durch die zweite Fläche (12), wobei das Element zum Maskieren Folgendes sein kann:
- ein Teil eines funktionalen Elements, insbesondere einer Polymerkapselung,
- und/oder ein Email, das ausreichend lichtundurchlässig ist, auf dem Umfang der zweiten Fläche und/oder auf der ersten Fläche oder einer Fläche einer Blattfolie, die gegenüber der ersten Fläche angefügt ist, insbesondere wenn das funktionale Element einseitig oder zweiseitig ist,
- und/oder eine reflektierende Oberfläche auf dem Umfang der zweiten Fläche und/oder auf der ersten Fläche oder einer Fläche, die gegenüber der ersten Fläche angefügt ist.

8. Leuchtende Fahrzeugverglasung (100, 200, 300, 400) nach einem der vorstehenden Ansprüche, **dadurch gekennzeichnet, dass** die erste Scheibe (1,1') organisch ist, bestehend aus zwei Stoffen transparent und lichtundurchlässig, und die lichtundurchlässige Zone (1') der ersten Scheibe (1), auf dem Umfang der zweiten Fläche (12) und/oder auf der ersten Fläche, eine Maskierung der Lichtquelle (2) und eines eventuellen Störlichts bildet, und/oder eine Maskierung der Befestigung (91) der Verglasung an der Karosserie (90) des Fahrzeugs durch die zweite Fläche (12) bildet.

9. Leuchtende Fahrzeugverglasung (100, 200, 300, 400) nach einem der vorstehenden Ansprüche, **dadurch gekennzeichnet, dass** der Raum der emittierten Strahlungen vor dem Injizieren, Kopplungsraum genannt, gasförmig, lokal und am Umfang der internen Fläche der Haube (4) oder auf einer Seite der Haube (4) liegt.

10. Leuchtende Fahrzeugverglasung (100, 200, 300, 400) nach einem der vorstehenden Ansprüche, **dadurch gekennzeichnet, dass** die Befestigung der Lichtquelle (2) an der Verglasung außerhalb des Kopplungsraums realisiert wird, insbesondere außerhalb des Injektionsrands (14) und für die Dioden durch die Befestigung des Tragprofils (3).

11. Leuchtende Fahrzeugverglasung (100, 200, 300, 400) nach einem der vorstehenden Ansprüche, **dadurch gekennzeichnet, dass** die Befestigung der Lichtquelle (2) an der Verglasung außerhalb des Kopplungsraums, außerhalb des Injektionsrands (14) und durch die Befestigung des Tragprofils (3) insbesondere durch Kleben oder ein doppelseitiges Klebeband oder Clipsen auf einer der Flächen (11, 12, 13) der ersten Scheibe (1, 1'), das insbesondere organisch ist, insbesondere auf der zweiten Fläche (12, 13) und/oder auf der internen Fläche der Haube (4) realisiert wird.

12. Leuchtende Fahrzeugverglasung nach einem der vorstehenden Ansprüche, **dadurch gekennzeichnet, dass** das interfaziale Abdichtungselement bevorzugt am Umfang der Haube (4) ein umkehrbarer Klebstoff ist, der zu den Befestigungsmitteln der Haube (4) gehört oder diese bildet, die daher umkehrbar sind, bevorzugt ein Klebstoffstrang, der als Strang insbesondere in Berührung mit der internen Fläche der Haube oder dem Verbindungsteil (durch seine freie externe Fläche) oder der zweiten Fläche eingerichtet ist, insbesondere Klebstoff vom Typ Bi-Komponenten-Epoxid.

13. Leuchtende Fahrzeugverglasung (100, 200, 300) nach einem der vorstehenden Ansprüche, **dadurch gekennzeichnet, dass** die Befestigungsmittel der Haube umkehrbar sind, wobei die Befestigungsmittel ausgewählt sind aus:
- Mitteln zum Clipsen, die auf der Haube eingerichtet sind, und insbesondere für das Clipsen in einer oder mehreren Aufnahmezonen in der ersten Scheibe, die insbesondere organisch ist, und/oder des Verbindungsteils aufgenommen sind, und eventuell außerdem in dem funktionalen Element aufgenommen sind;
- Mittel zum Clipsen, insbesondere vom Typ Haken, die fester Bestandteil der Haube sind, bevorzugt außerhalb in der Abdichtungszone, und die insbesondere in einer oder mehreren Aufnahmezonen der ersten Scheibe, die insbesondere organisch ist, und/oder des Verbindungsteils aufgenommen sind, und eventuell außerdem in dem funktionalen Element aufgenommen sind;
- Schraubmittel.

14. Leuchtende Fahrzeugverglasung nach einem der vorstehenden Ansprüche, **dadurch gekennzeichnet, dass** das Verbindungsteil ein ausgehöhltes einseitiges Teil mit geschlossener Kontur, wie einen Rahmen, bildet.

15. Leuchtende Fahrzeugverglasung (100, 200, 300, 400) nach einem der vorstehenden Ansprüche, **dadurch gekennzeichnet, dass** die Haube ein Zierelement ist, oder dass die Haube (4) nach dem Befestigen der Verglasung an der Karosserie maskiert wird, wobei die Haube zum Beispiel entlang des Randes bzw. der Ränder liegt oder einen Rahmen bildet.

16. Leuchtende Fahrzeugverglasung nach einem der vorstehenden Ansprüche, **dadurch gekennzeichnet, dass** die Haube (4) Haltemittel (50') des Profils (3) und/oder eine Aussparung (50) für das Durchgehen der Verbindungselemente und/oder der Positionierungsmittel des Tragprofils der Dioden (3) umfasst.

17. Leuchtende Fahrzeugverglasung (100, 200, 300, 400) nach einem der vorstehenden Ansprüche, **dadurch gekennzeichnet, dass** die Verglasung einfach ist, wobei die erste Scheibe (1) aus mineralischem oder organischem Glas, insbesondere aus PC, PMMA, PU, eventuell Zweikomponentenmaterial (1') besteht.

18. Leuchtende Fahrzeugverglasung (100, 200, 300, 400) nach einem der vorstehenden Ansprüche, **dadurch gekennzeichnet, dass** die leuchtende Zone bzw. die leuchtenden Zonen eine interne Ambientebeleuchtung, eine interne Lesebeleuchtung, eine interne und/oder externe Signalisierungsleuchtanzeige bilden.

## Claims

1. A luminous glazing unit (100, 200, 300, 400) for a vehicle, comprising:
- a first pane of mineral or organic glass (1) having a first main face (11), a second main face (12, 13) and a side face (10),
- a peripheral light source (2) which has an emitting face (21) and is formed by light-emitting diodes (2), each comprising a semiconductor chip on a profiled section for supporting the diodes (3), the emitting face facing an edge of the second face (12) referred to as the injection face for propagation of the injected visible and/or ultraviolet, so-called UV, light in the thickness of the first pane, the first pane (1) then acting as a guide for the injected light, the injection edge optionally being partly recessed or with a step,
- means for forming at least one luminous region, namely:
- means for extracting the guided light via the first and/or second main face, which are scattering means on the surface of the first and/or second main face or scattering means in the volume of the first pane,
- and/or, when the injected light is UV light, means for converting the UV light into visible light via the first and/or second main face, which are luminescent materials in particular on the first and/or second main face,
- an optional attached peripheral functional element (7) bonded to the first pane, which is leaktight against fluid(s) and is selected from an overmolding or a prefitted element,
- a cap (4) covering the source (2), which is leaktight against fluid(s), in particular liquid water or water vapor,
- the so-called facial cap (4), that is to say essentially one facing the second face, and which is secured by fastening means (83)
- to the first pane, in particular made of organic glass
- and/or to a connecting piece bonded to the first pane,
- and optionally to the functional element, the cap and the diode support being removable from the glazing unit,
and the diode support at least is provided, advantageously before its integration into the glazing unit, with at least one moisture protection layer and/or an encapsulation such as a varnish of the silicone, epoxy or acrylic type.

2. The luminous glazing unit (100, 200, 300, 400) for a vehicle as claimed in claim 1, **characterized in that** the cap has a so-called internal general face oriented toward the second face and the cap is associated with an interfacial element (5) for interfacial sealing against one or more fluids, in particular liquid water or water vapor, which is arranged between the cap and the connecting piece and/or optionally between the cap and the functional element or integrated into the cap, or integrated into the connecting piece or integrated into the first pane or between the cap and the glass pane (1').

3. The luminous glazing unit for a vehicle as claimed in the preceding claim, **characterized in that** the interfacial sealing element, preferably at the periphery of the cap (4), is a reversible adhesive forming part of or constituting said means for fastening the cap (4), which are then reversible, preferably a bead of adhesive arranged in a bead, in particular in contact with the internal face of the cap or with the connecting piece (via its free external face) or the second face, in particular an adhesive of the dual component epoxy type.

4. The luminous glazing unit (100, 200, 300, 400) for a vehicle as claimed in one of claims 1 to 3, **characterized in that** the first pane (1) is made of glass, in particular organic glass, in particular PC, with a blind hole (70, 8) in its thickness from the second face (12), for example a step, in order to accommodate the source facing the injection edge (14).

5. The luminous glazing unit (100, 200, 300, 400) for a vehicle as claimed in one of claims 1 to 4, **characterized in that** the organic first pane is transparent and opaque double material and the opaque region (1') of the first pane (1) lies on the periphery of the second face (12) and/or on the first face, the diodes lie in a hole (8) or groove made in the opaque region (1') of the first pane (1) on the periphery of the second face (12) and the profiled support section (3) bears in a recess (70), which is wider than the groove (8), the profiled support section (3) preferably being held by the cap, for example by fins or hooks (50').

6. The luminous glazing unit (300) for a vehicle as claimed in the preceding claim, **characterized in that** the hole (70, 8) is provided over the entire periphery of the second face (12) and the cap (4) forms a frame, in particular incorporating said fastening means.

7. The luminous glazing unit (200) for a vehicle as claimed in one of the preceding claims, **characterized in that** the glazing unit comprises an element for masking the source and possible stray light, and/or for masking the fastening (91) of the glazing unit to the bodywork (90) of the vehicle by the second face (12), in which case the masking element may be:
- a functional element part, in particular a polymeric encapsulation,
- and/or a sufficiently opaque enamel on the periphery of the second face and/or on the first face, or a face of a sheet film attached facing the first face, in particular when the functional element is single-face or double-face,
- and/or a reflective surface on the periphery of the second face and/or on the first face, or an attached face facing the first face.

8. The luminous glazing unit (100, 200, 300, 400) for a vehicle as claimed in one of the preceding claims, **characterized in that** the first pane (1, 1') is made of organic transparent and opaque double material, and the opaque region (1') of the first pane (1), on the periphery of the second face (12) and/or on the first face, forms masking of the source (2) and possible stray light, and/or forms masking of the fastening (91) of the glazing unit to the bodywork (90) of the vehicle by the second face (12).

9. The luminous glazing unit (100, 200, 300, 400) for a vehicle as claimed in one of the preceding claims, **characterized in that** the space of the radiation emitted before injection, referred to as the coupling space, is gaseous, local and at the periphery of the internal face of the cap (4) or on a side of the cap (4).

10. The luminous glazing unit (100, 200, 300, 400) for a vehicle as claimed in one of the preceding claims, **characterized in that** the fastening of the source (2) to the glazing unit is carried out outside the coupling space, in particular outside the injection edge (14), and for the diodes by the fastening of the profiled support section (3).

11. The luminous glazing unit (100, 200, 300, 400) for a vehicle as claimed in one of the preceding claims, **characterized in that** the fastening of the source (2) to the glazing unit is carried out outside the coupling space, outside the injection edge (14) and by the fastening of the profiled support section (3), in particular by gluing or double-sided adhesive bonding or clip fastening, onto one of the faces (11, 12, 13) of the first pane (1, 1'), which is in particular organic, in particular the second face (12, 13) and/or onto the internal face of the cap (4).

12. The luminous glazing unit for a vehicle as claimed in the preceding claim, **characterized in that** the interfacial sealing element, preferably at the periphery of the cap (4), is a reversible adhesive forming part of or constituting said means for fastening the cap (4), which are then reversible, preferably a bead of adhesive arranged in a bead, in particular in contact with the internal face of the cap or with the connecting piece (via its free external face) or the second face, in particular an adhesive of the dual component epoxy type.

13. The luminous glazing unit (100, 200, 300) for a vehicle as claimed in one of the preceding claims, **characterized in that** the means for fastening the cap are reversible, the fastening means being selected from among:
- clip-fastening means, arranged on the cap, and in particular received for the clip fastening in one or more reception regions in the first pane, which is in particular organic, and/or of the connecting piece and optionally furthermore received in the functional element;
- clip-fastening means, in particular of the hook type, forming an integral part of the cap, preferably outside in the sealing region, and in particular received in one or more reception regions of the first pane, which is in particular organic, and/or of the connecting piece and optionally furthermore received in the functional element;
- screwing means.

14. The luminous glazing unit for a vehicle as claimed in one of the preceding claims, **characterized in that** the connecting piece forms a single-face recessed piece with a closed contour, such as a frame.

15. The luminous glazing unit (100, 200, 300, 400) for a vehicle as claimed in one of the preceding claims, **characterized in that** the cap is an ornamentation, or the cap (4) is masked after the glazing unit is fastened to the bodywork, the cap being for example along one or more edges or forming a frame.

16. The luminous glazing unit for a vehicle as claimed in one of the preceding claims, **characterized in that** the cap (4) comprises means (50') for holding said profiled section (3) and/or a recess (50) for passage of the connection means and/or means for positioning the profiled section for supporting the diodes (3).

17. The luminous glazing unit (100, 200, 300, 400) for a vehicle as claimed in one of the preceding claims, **characterized in that** the glazing unit is a single-glazing unit, the first pane (1) being made of mineral or organic glass, in particular PC, PMMA, PU, optionally double material (1').

18. The luminous glazing unit (100, 200, 300, 400) for a vehicle as claimed in one of the preceding claims, **characterized in that** the luminous region or regions form internal ambient lighting, internal reading lighting, or a luminous display for internal and/or external signaling.
